# EUROPÄISCHE PATENTANMELDUNG

(11) **EP 1 020 689 A2**
(43) Veröffentlichungstag der Anmeldung: **19.07.2000**
(21) Anmeldenummer: 00100528.9
(22) Anmeldetag: 12.01.2000
(51) Int. Cl.: F25B 17/08, F25B 35/04

(54) **Sorberanordnung mit einer Sorptionsmittelfüllung**

(30) Priorität: 14.01.1999 DE 19901094
(71) Anmelder: ZEO-TECH Zeolith Technologie GmbH, D-85716 Unterschleissheim (DE)
(72) Erfinder: Becky, Andreas, 85521 Ottobrunn (DE); Giglmaier, Reinhard, Dipl.-Ing., 83410 Laufen (DE); Maier-Laxhuber, Peter Dr., 85386 Dietersheim (DE)

(57) **Zusammenfassung**

Sorberanordnung mit einer Sorptionsmittelfüllung (2), die über einen Sorber-Wärmetauscher (1) erwärmt und anschließend wieder gekühlt wird, wobei zur Erwärmung heiße Heiz-Gase (B) und zur Abkühlung Kühl-Flüssigkeiten (7) über den Sorber-Wärmetauscher (1) strömen.

## Beschreibung

Die Erfindung betrifft eine Sorberanordnung mit einer Sorptionsmittelfüllung, die über einen Sorber-Wärmetauscher erwärmt und anschließend wieder gekühlt wird.

Sorptionsvorrichtungen mit festen Sorptionsmitteln sind beispielsweise aus der DE 4331145 A1 bekannt. Darin ist eine Sorptionsvorrichtung zum Kühlen und/oder Heizen beschrieben. Sorptionsbehälter, gefüllt mit Sorptionsmittel saugen dabei Arbeitsmitteldampf, welcher in einem Verdampfer entsteht, ab und sorbieren ihn in der Sorptionsmittelfüllung unter Wärmefreisetzung. Die Sörptionswärme muß aus der Sorptionsmittelfüllung abgeführt werden. Nachdem das Sorptionsmittel gesättigt ist, muß es durch Wärmezufuhr wieder desorbiert (Arbeitsmittel dampft aus dem Sorptionsmittel aus) werden.

Für feste Sorptionsmittel, wie beispielsweise Zeolith, sind zur Desorption Temperaturen von vorzugsweise über 250 °C sinnvoll. Die hierfür zum Einsatz vorgesehenen Wärmemengen stammen überwiegend aus Verbrennungsprozessen. Abgase aus Motoren haben teilweise Temperaturen von über 400 °C.

Die aus einem Sorptionsapparat abzuführenden Wärmemengen stehen hingegen auf einem tieferem Temperaturniveau bereit. Für eine effiziente Nutzung dieses Temperatumiveaus haben sich flüssige Wärmeträgerkreisläufe bewährt.

Bei Sorptionsanordnungen stellt sich somit das Problem, die Desorptionswärme von einem gasförmigen Wärmeträger aufzunehmen und an einen flüssigen Wärmeträgerkreislauf abzugeben.

Aufgabe der vorliegenden Erfindung ist die Darstellung einer Sorptionsanordnung zum Kühlen und/oder Heizen, welche eine effiziente und wirtschaftliche Betriebsweise erlaubt.

Gelöst wird diese Aufgabe mittels einer Sorptionsanordnung gemäß Anspruch 1. Die abhängigen Ansprüche zeigen vorteilhafte Ausgestaltungen.

Über den das Sorptionsmittel enthaltenden Sorber-Wärmetauscher wird zur Erwärmung heißes Heiz-Gas und zur Abkühlung eine Kühl-Flüssigkeit geleitet. Die Sorberanordnung benötigt dadurch nur einen einzigen Wärmetauscher, der die Wärme in die Sorptionsmittelfüllung hinein und anschließend wieder ableitet.

Besonders kostengünstig wird die Anordnung dann, wenn die Oberflächen der Kühl-Flüssigkeit in direktem Kontakt zu dem Heiz-Gas stehen und die Ein- bzw. Ausströmungsöffnungen so angeordnet sind, daß durch den Flüssigkeitsstand der Zustrom von Heiz-Gas zum Sorberwärmetauscher unterbunden wird. Eine separate Steuerung des Heiz-Gases kann damit entfallen.

Bei Sorptionsapparaten muß nicht nur aus dem Sorber-Wärmetauscher Wärme abgeführt werden, sondern auch aus einem angeschlossenen Verflüssiger. In diesem Bauteil gibt das zu kondensierende Arbeitsmittels seine Kondensationswärme während der Desorptionsphase, zeitverschoben zur Wärmeabgabe aus dem Sorber-Wärmetauscher, ab.

Vorteilhaft kann diese Wärme von der Kühl-Flüssigkeit über eine geeignete Kühl-Fläche abgeführt werden. Erfindungsgemäß ist diese Kühl-Fläche ein Teilbereich des Sorber-Wärmetauschers, der keine Sorptionsmittelfüllung aufweist.

Bewährt haben sich Sorber-Wärmetauscher mit rohrförmiger Geometrie. Diese enthalten im Rohrinnenraum die Sorptionsmittelfüllung und geeignete Strömungskanäle für den zu- bzw. abströmenden Arbeitsmitteldampf. Über den Rohrmantel wird Wärme zu- bzw. abgeführt. Erfindungsgemäß dient ein Rohrende als Kühl-Fläche zur Verflüssigung des Arbeitsmittels. Bei entsprechender Einbaulage der Rohre kann das Kondensat in die angeschlossenen Bauteile des Sorptionsapparates (z.B. Sammelbehälter oder Verdampfer) abtropfen. Die Kühl-Flüssigkeit wird dann erfindungsgemäß während der Desorptionsphase nur über die Kühl-Fläche geleitet und während der Sorptionsphase zusätzlich über den Sorber-Wärmetauscherbereich, der die Sorptionsmittelfüllung enthält.

Als Sorptionsmittel hat sich Zeolith und als Arbeitsmittel Wasser bewährt. Verwendbar sind jedoch alle Adsorptionsmittel, die auch bei der Sorption fest bleiben und nicht flüssig werden.

Für die Kühl-Flüssigkeit wird vorteilhaft Wasser eingesetzt, dem geeignete Frostschutzmittel oder Mittel zur Neutralisation eventuell entstehender Säuren beigegeben sein können. Da die Flüssigkeitsoberflächen mit dem Heiz-Gas in direktem Kontakt stehen, werden zwangsläufig in diesem enthaltene Schad- und Feststoffe in die Flüssigkeit gelangen. Die Reiz-Gase werden gereinigt und abgekühlt in die Umwelt emmitiert.

In der Zeichnung sind zwei vorteilhafte Ausführungsbeispiele der Erfindung dargestellt. Es zeigt:
Fig. 1a eine Sorberanordnung während der Desorptionsphase,
Fig. 1b die Sorberanordnung nach Fig. 1a während der Sorptionsphase und
Fig. 2 eine weitere Sorberanordnung mit zwei abwechselnd beheizten und gekühlten Sorber-Wärmetauschern analog zu den Figuren 1a und 1b.

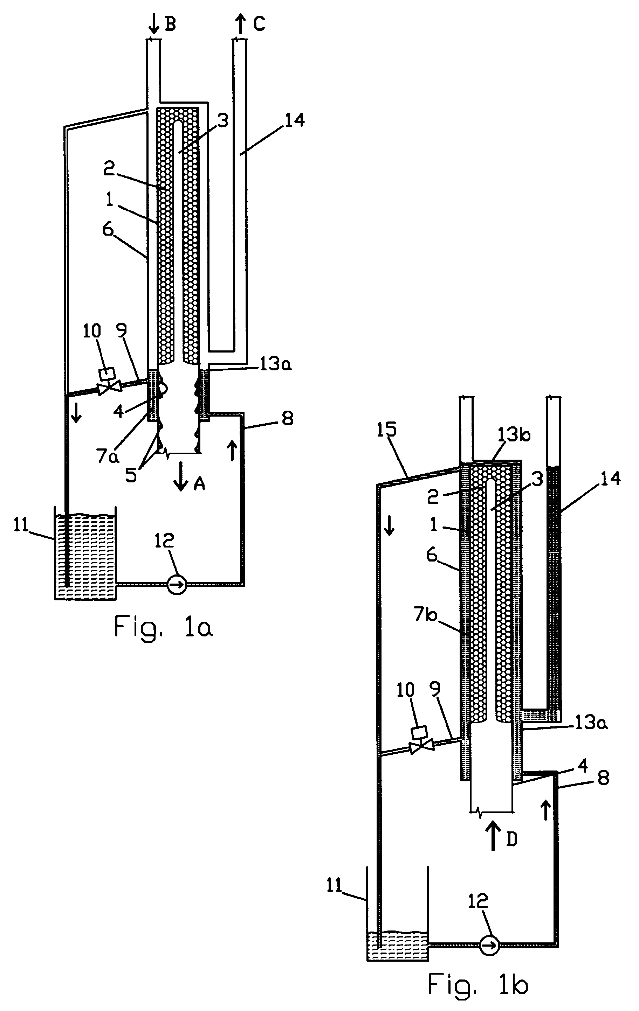

Ein einseitig offener, rohrförmiger Sorber-Wärmetauscher 1 gemäß Fig. 1a enthält im Innenbereich eine Sorptionsmittelfüllung 2, die von einem Strömungskanal 3 für ein dampfförmiges Arbeitsmittel durchzogen ist. Das aus der Sorptionsmittelfüllung abdampfende Arbeitsmittel verflüssigt sich an einer Kühl-Fläche 4 am unteren Rohrende, das keine Sorptionsmittelfüllung enthält. Das entstehende Arbeitsmittel-Kondensat 5 tropft in einen nicht dargestellten und durch Pfleil A lokalisierten Sorptionsapparate-Bereich. Die Kühl-Fläche 4 wird von einer Kühl-Flüssigkeit 7a umströmt, die über eine Flüssigkeitsleitung 8 einströmt und über einen Abfluß 9 und ein Ventil 10 in einen Ausgleichsbehälter 11 abläuft. Eine Flüssigkeitspumpe 12 pumpt die sich erwärmende Kühl-Flüssigkeit 7a gegebenenfalls auch zu einem nicht gezeichneten Wärmeverbraucher oder Flüssigkeitskühler. Im oberen Bereich eines Wärmetauscher-Gehäuses 6 befindet sich ein Zugang für heiße Heiz-Gase B. Bis zur Oberfläche 13a der Kühl-Flüssigkeit 7a einströmende Heiz-Gase erwärmen den Sorber-Wärmetauscher 1 auf ihrem Weg nach unten. Die abgekühlten Heiz-Gase C verlassen die Sorberanordnung durch ein Steigrohr 14 im oberen Bereich.

Fig 1b unterscheidet sich von Fig. 1a nur dahingehend, daß das Ventil 10 geschlossen ist und die Kühl-Flüssigkeit 7b deshalb im Innenraum des Wärmetauscher-Gehäuses 6 aufsteigt, bis sie über einen oberen Überlauf 15 in den Ausgleichsbehälter 11 abläuft. Die Oberfläche 13b der Kühlflüssigkeit liegt damit oberhalb des Sorber-Wärmetauschers 1. Der Zustrom von Heiz-Gas ist unterbunden. Durch die aufsteigende Kühl-Flüssigkeit 7b wird die Sorptionsmittelfüllung gekühlt. Diese vermag dadurch Arbeitsmitteldampf aus einer nicht gezeichneten, aber durch Pfeil D lokalisierten Dampfquelle anzusaugen. Die Dampfquelle kann beispielsweise ein Verdampfer sein, in dem Wasser zu Eis erstarrt.

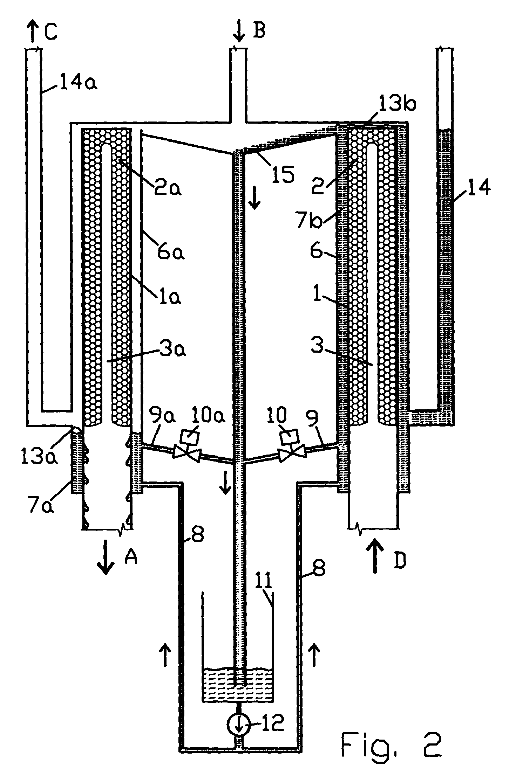

Fig. 2 zeigt schließlich einen Sorptionsapparat mit zwei baugleichen Sorberanordnungen, die phasenverschoben, gemäß der Erläuterungen zu den Fig. 1a und 1b arbeiten.

Die Sorptionsmittelfüllungen 2 und 2a werden abwechselnd über die gemeinsamen Komponenten Flüssigkeitspumpe 12, Überlauf 15 und Ausgleichsbehälter 11 mit Kühl-Flüssigkeit gekühlt und über den Heiz-Gas-Zutritt B beheizt. Zum jeweiligen Umschalten von der Adsorptions- in die folgende Desorptionsphase müssen lediglich die Ventile 10 und 10a abwechselnd geöffnet und geschlossen werden. Der sich dadurch ändernde Flüssigkeitsstand innerhalb der Sorber-Gehäuse 6 und 6a steuert automatisch den Zustrom und die Ableitung der Heiz-Gase. Die Ableitung des Arbeitsmittelkondensates (Pfeil A) und der Zustom (Pfeil D) von Arbeitsmitteldampf erfolgen nach bekannten Verfahren.

Vorteilhaft wird vor dem Schließen eines der Ventile 10 bzw. 10a zuerst das momentan geschlossene geöffnet, um den Flüssigkeitsstand in dessen Sorber-Gehäuse abzusenken. Bei zeitgleichem Umschalten der Ventile würde sonst kurzzeitig die Gefahr bestehen, daß beide Steigrohre 14 und 14a für das Reiz-Gas blockiert sind.

Die erfindungsgemäße Bauart hat ferner den Vorteil, daß nach dem Schließen eines der Ventile 10 bzw. 10a die aufsteigende Kühl-Flüssigkeit mit sehr heißer Sorptionsmittelfüllung in Kontakt kommt und deshalb relativ schnell ihren Siedepunkt erreicht. Aus der ansteigenden Flüssigkeitssäule strömt dann Wasserdampf ab, der zusammen mit dem heißen Heiz-Gas in das jeweils andere Sorber-Gehäuse von oben einströmt und, da die Sorber-Wärmetauscher noch relativ kalt sind, dort auch unter Wärmeabgabe kondensiert. Auf diese Weise wird Wärme vom heißen Sorber-Wärmetauscher auf den kalten überführt. Ein Verfahren das den Sorptionsprozeß beschleunigt und zugleich Desorptionswärme einspart.

## Patentansprüche

1. Sorberanordnung mit einer Sorptionsmittelfüllung (2), die über einen Sorber-Wärmetauscher (1) erwärmt und anschließend wieder gekühlt wird,
dadurch gekennzeichnet, daß
zur Erwärmung heiße Heiz-Gase (B) und zur Abkühlung Kühl-Flüssigkeiten (7) über den Sorber-Wärmetauscher (1) strömen.

2. Sorberanordnung nach Anspruch 1,
dadurch gekennzeichnet, daß
die Oberflächen der Kühl-Flüssigkeit (13a, 13b) direkten Kontakt mit dem Heiz-Gas (B) haben.

3. Sorberanordnung nach einem der vorangehenden Ansprüche,
dadurch gekennzeichnet, daß
die Strömungswege für die Heiz-Gase (B) und die Kühl-Flüssigkeit (7a, 7b) so angeordnet sind, daß bei durch die Kühl-Flüssigkeit (7b) gekühltem Sorber-Wärmetauscher (1) der Zutritt für die Heiz-Gase (B) zum Sorber-Wärmetauscher (1) durch den Stand der Flüssigkeit unterbunden ist.

4. Sorberanordnung nach einem der vorangehenden Ansprüche, mit einer Kühl-Fläche (4) zum Verflüssigen von Arbeitsmitteldampf, der aus der Sorptionsmittelfüllung (2) beim Erwärmen entweicht,
dadurch gekennzeichnet, daß
während des Erwärmens der Sorptionsmittelfüllung (2) durch Heiz-Gase (B) die Kühl-Fläche (4) durch die Kühl-Flüssigkeit (7a) gekühlt wird.

5. Sorberanordnung nach einem der vorangehenden Ansprüche,
dadurch gekennzeichnet, daß
der Sorber-Wärmetauscher (1) Rohre enthält, die im Innenraum die Sorptionsmittelfüllung (2) enthalten und über die Rohroberfläche Wärme zu- bzw. abgeführt werden kann.

6. Sorberanordnung nach Anspruch 5,
dadurch gekennzeichnet, daß
die Rohre an einem Ende als Kühl-Fläche (4) ausgebildet sind.

7. Sorberanordnung nach einem der vorangehenden Ansprüche,
dadurch gekennzeichnet, daß
die Kühl-Flüssigkeit (7b) Wasser enthält und daraus abströmender Wasserdampf Wärme vom heißen an den jeweils kälteren Sorber-Wärmetauscher (1, 1a) überträgt.

8. Sorberanordnung nach einem der vorangehenden Ansprüche,
dadurch gekennzeichnet, daß
das Heiz-Gas (B) das Abgas einer Verbrennungskraftmaschine ist.

9. Sorberanordnung nach einem der vorangehenden Ansprüche,
dadurch gekennzeichnet, daß
die Sorptionsmittelfüllung (2) Zeolithe enthält.

10. Sorberanordnung nach einem der vorangehenden Ansprüche,
dadurch gekennzeichnet, daß
das Arbeitsmittel Wasserdampf ist und aus einem angeschlossenen Verdampfer zuströmen kann.
